# EUROPÄISCHE PATENTSCHRIFT

(11) **EP 3 924 638 B1**
(45) Veröffentlichungstag und Bekanntmachung des Hinweises auf die Patenterteilung: **12.04.2023**
(21) Anmeldenummer: 20703273.1
(22) Anmeldetag: 12.02.2020
(51) Int. Cl.: F16F 9/58, F16F 9/54, F16F 9/32, B60G 13/00, B60G 7/04, B60G 15/06, F16N 15/00

(54) **STOSSDÄMPFERANORDNUNG FÜR EINE FAHRZEUGFEDERUNG, UND VERWENDUNG EINES GLEITMITTELS FÜR SELBIGE**
SHOCK ABSORBER ASSEMBLY FOR A VEHICLE SUSPENSION AND USE OF A LUBRICATING AGENT FOR THE SAME
DISPOSITIF AMORTISSEUR POUR UNE SUSPENSION DE VÉHICULE ET UTILISATION D'UN LUBRIFIANT POUR UN TEL DISPOSITIF AMORTISSEUR

(30) Priorität: 12.02.2019 EP 19156778
(43) Veröffentlichungstag der Anmeldung: 22.12.2021
(73) Patentinhaber: BASF Polyurethanes GmbH, 49448 Lemförde (DE)
(72) Erfinder: LEE, Jae Hong, 49448 Lemförde (DE); HOLWITT, Ulrich, 49448 Lemförde (DE); RITTIG, Frank, 67056 Ludwigshafen (DE)
(74) Vertreter: BASF IP Association
(86) Internationale Anmeldenummer: PCT/EP2020/053595
(87) Internationale Veröffentlichungsnummer: WO 2020/165247

(56) Entgegenhaltungen:
- EP-B1- 0 545 765
- DE-A1- 10 247 640
- DE-A1-102015 216 075
- DE-T5-112014 001 146
- GB-A- 1 072 495
- JP-A- 2010 053 285
- JP-A- 2010 100 223
- JP-B2- 4 870 385
- US-B2- 8 915 164

## Beschreibung

Die vorliegende Erfindung betrifft eine Stoßdämpferanordnung für eine Fahrzeugfederung, mit einem Stoßdämpfer, der eine Dämpferkappe und eine Kolbenstange aufweist, und einer an der Kolbenstange gegenüber dem Stoßdämpfer angeordneten Zusatzfeder, welche eine der Dämpferkappe zugewandte Mantelfläche und eine der Kolbenstange zugewandte Innenfläche aufweist und dazu eingerichtet ist, die Bewegung des Stoßdämpfers in Richtung der Kolbenstange bei Kontakt mit der Dämpferkappe zu dämpfen.

Stoßdämpferanordnungen der vorstehend bezeichneten Art sind allgemein bekannt. Im Fahrzeugbetrieb kommt es infolge einer Einfederungsbewegung der Radaufhängung des Fahrzeugs üblicherweise dazu, dass sich der Stoßdämpfer mit seiner Dämpferkappe in Richtung der Kolbenstange bewegt. Um bei einem Durchschlagen der Federung des Fahrzeugs eine Beschädigung des Stoßdämpfers und gegebenenfalls sonstiger Komponenten der Federung zu vermeiden, weisen die Stoßdämpferanordnungen häufig eine Zusatzfeder auf, die ab einer bestimmten Kompression der Federung und entsprechend fortgeschrittenem Bewegungszustand des Stoßdämpfers in Kontakt mit der Dämpferkappe gelangt und eine weitere Kompressionsbewegung dämpft. Hierzu werden vorteilhaft volumenkompressible Werkstoffe eingesetzt, die eine Materialdämpfung mittels ihrer Geometrie und/oder Volumenkompression herbeiführen.

Es ist beobachtet worden, dass während des Betriebs der vorbezeichneten Stoßdämpferanordnungen Quietschgeräusche entstehen, die zwar die Funktionsweise der Stoßdämpferanordnung als solche nicht beeinträchtigen, allerdings als störend wahrgenommen werden.

Zur Fertigung der Formkörper aus mikrozellulärem Polyurethan wird die Oberfläche der Form häufig, sogar üblicherweise mit einem Trennmittel vorbehandelt. Dem Fachmann bekannt sind Trennmittel auf Basis von Ölen, Wachsen, Silikonen und/oder festen anorganischen oder organischen Zusätzen, wie beispielsweise Teflonpulver, oder weiteren Produkten, die die Haftung des Polyurethans auf der Formoberfläche reduzieren. Es ist bekannt, dass gewisse Trennmittel ihrerseits bereits Geräuschemissionen reduzieren oder sogar vermeiden können, speziell einige Typen silikonhaltiger Trennmittel. Aus Gründen von Gesundheits- und Umweltschutz sind diese Varianten aber nicht bevorzugt.

Bei der Herstellung der Formkörper verbleibt fast immer auch ein Rückstand des Trennmittels auf der Formteiloberfläche. Die Art des Rückstands lässt sich durch die Wahl des Trennmittels beeinflussen, die Menge des Rückstands hängt aber von zahlreichen Faktoren während der Fertigung ab. Diese Rückstände bewirken stellenweise bereits eine Modifikation der Geräuschentwicklung. Da das Trennmittel häufig unverzichtbarer Bestandteil des Fertigungsprozesses ist, wird im Zusammenhang mit der Erfindung im Folgenden bei der Nennung des Formkörpers aus mikrozellulärem Polyurethan immer sowohl der reine Polyurethanformkörper als auch der Formkörper, an dessen Oberfläche noch Rückstände eines Trennmittels anhaften, referenziert. Sofern im Folgenden auf einen "trockenen" Formkörper Bezug genommen wird, sind hierunter sowohl trennmittelfreie als auch mit Resten von Trennmittel behaftete Formkörper gemeint.

Zur Bekämpfung der vorstehend beschriebenen Geräuschemissionen ist in der Vergangenheit der Versuch unternommen worden, silikonhaltige Trennmittel im Fertigungsprozess einzusetzen. Aufgrund von Gesundheitsbelastungen, die von einigen siliziumhaltigen Verbindungen ausgehen können, ist jene Lösung aber unerwünscht.

Es lag daher der Erfindung die Aufgabe zugrunde, eine alternative Möglichkeit anzugeben, die Geräusche im Betrieb von Stoßdämpferanordnungen möglichst weitgehend zu mindern. Insbesondere lag der Erfindung ferner die Aufgabe zugrunde, eine solche Lösung anzugeben, die frei von Gesundheitsbelastungen ist.

Die Erfindung löst die ihr zugrundeliegende Aufgabe bei einer Stoßdämpferanordnung der eingangs bezeichneten Art, indem die Mantelfläche und/oder die Innenfläche der Zusatzfeder zumindest partiell mit einem Gleitmittel beschichtet ist, das von dem Dämpferfluid verschieden ist.

In einer bevorzugten Weiterbildung weist der Stoßdämpfer ein Dämpferfluid auf, und das Gleitmittel ist von dem Dämpferfluid verschieden.

Die Erfindung wird besonders vorteilhaft weitergebildet, indem die Zusatzfeder teilweise oder vollständig aus einem volumenkompressiblen Werkstoff ausgebildet ist.

Besonders bevorzugt ist das volumenkompressible Material (auch: volumenkompressibler Werkstoff) als Elastomer auf der Basis von zelligen, insbesondere mikrozelligen, Polyisocyanat-Polyadditionsprodukten, insbesondere auf der Basis von mikrozelligen Polyurethanelastomeren und/oder thermoplastischem Polyurethan, vorzugsweise enthaltend Polyharnstoffstrukturen ausgebildet.

Volumenkompressible Materialien wie die vorgenannten haben den besonderen Vorteil, dass sie im Vergleich zu anderen Materialien wie beispielsweise Gummi ein extrem hohes elastisches Formänderungsvermögen bei gleichzeitig hoher Standfestigkeit aufweisen.

Die Polyisocyanat-Polyadditionsprodukte sind bevorzugt auf der Basis von mikrozelligen Polyurethanelastomeren, auf der Basis von thermoplastischem Polyurethan oder aus Kombinationen aus diesen beiden Materialien aufgebaut, die ggf. Polyharnstoffstrukturen enthalten können.

Besonders bevorzugt sind mikrozellige Polyurethanelastomere, die in einer bevorzugten Ausführungsform eine Dichte nach DIN 53420 von 200 kg/m³ bis 1100 kg/m³, bevorzugt 300 kg/m³ bis 800 kg/m³ haben.

Bevorzugt handelt es sich bei den Elastomeren um mikrozellige Elastomere auf der Basis von Polyisocyanat-Polyadditionsprodukten, bevorzugt mit Zellen mit einem Durchmesser von 0,01 mm bis 0,5 mm.

Elastomere auf der Basis von Polyisocyanat-Polyadditionsprodukten und ihre Herstellung sind allgemein bekannt und vielfältig beschreiben, beispielsweise in EP-A 62 835, EP-A 36 994, EP-A 250 969, DE-A 195 48 770 und DE-A 195 48 771.

Die Herstellung erfolgt üblicherweise durch Umsetzung von Isocyanaten mit gegenüber Isocyanaten reaktiven Verbindungen.

Die Elastomere auf der Basis von zelligen Polyisocyanat-Polyadditionsprodukten werden üblicherweise in einer Form hergestellt, in der man die reaktiven Ausgangskomponenten miteinander umsetzt. Als Formen kommen hierbei allgemein übliche Formen in Frage, beispielsweise Metallformen, die aufgrund ihrer Form die erfindungsgemäße dreidimensionale Form des Federelements gewährleisten. Die Konturelemente werden in einer Ausführungsform mittels einer Schäumform erzeugt. In einer weiteren Ausführungsform werden sie nachträglich in den konzentrischen Grundkörper eingearbeitet. Es sind auch aus Halbzeugen gefertigte Teile denkbar. Die Fertigung kann z.B. über Wasserstrahlschneiden erfolgen.

Die Herstellung der Polyisocyanat-Polyadditionsprodukte kann nach allgemein bekannten Verfahren erfolgen, beispielsweise indem man in einem ein- oder zweistufigen Prozess die folgenden Ausgangsstoffe einsetzt:
(a) Isocyanat,
(b) gegenüber Isocyanaten reaktiven Verbindungen,
(c) Wasser und gegebenenfalls
(d) Katalysatoren,
(e) Treibmittel und/oder
(f) Hilfs- und/oder Zusatzstoffe, beispielsweise Polysiloxane und/oder Fettsäuresulfonate.

Die Oberflächentemperatur der Forminnenwand beträgt üblicherweise 30°C bis 110°C, bevorzugt 50°C bis 100°C. Die Herstellung der Formteile wird vorteilhafterweise bei einem NCO/OH-Verhältnis von 0,85 bis 1,20 durchgeführt, wobei die erwärmten Ausgangskomponenten gemischt und in einer der gewünschten Formteildichte entsprechenden Menge in ein beheiztes, bevorzugt dicht schließendes Formwerkzeug gebracht werden. Die Formteile sind nach 5 Minuten bis 60 Minuten ausgehärtet und damit entformbar. Die Menge des in das Formwerkzeug eingebrachten Reaktionsgemisches wird üblicherweise so bemessen, dass die erhaltenen Formkörper die bereits dargestellte Dichte aufweisen. Die Ausgangskomponenten werden üblicherweise mit einer Temperatur von 15°C bis 120°C, vorzugsweise von 30°C bis 110°C, in das Formwerkzeug eingebracht. Die Verdichtungsgrade zur Herstellung der Formkörper liegen zwischen 1,1 und 8, vorzugsweise zwischen 2 und 6. Die zelligen Polyisocyanat-Polyadditionsprodukte werden zweckmäßigerweise nach dem "one shot"-Verfahren mit Hilfe der Hochdrucktechnik, der Niederdruck-Technik oder insbesondere der Reaktionsspritzguss-Technik (RIM) in offenen oder vorzugsweise geschlossenen Formwerkzeugen, hergestellt. Alternativ wird ein Pre-Polymer-Prozess zur Herstellung der zelligen Polyisocyanat-Polyadditionsprodukte angewandt. Die Reaktion wird insbesondere unter Verdichtung in einem geschlossenen Formwerkzeug durchgeführt. Die Reaktionsspritzguss-Technik wird beispielsweise beschrieben von H. Piechota und H. Röhr in "Integralschaumstoffe", Carl Hanser-Verlag, München, Wien 1975; D.J. Prepelka und J.L. Wharton in Journal of Cellular Plastics, März/April 1975, Seiten 87 bis 98 und U. Knipp in Journal of Cellular Plastics, März/April 1973, Seiten 76-84.

JP 2010 100223 A offenbart den Oberbegriff des Anspruchs 1 und den Oberbegriff des Anspruchs 12.

Es ist erfindungsgemäß erkannt worden, dass bei einer "trockenen" Stoßdämpferanordnung und gleichzeitiger Verwendung eines volumenkompressiblen Werkstoffs wie etwa mikrozelligem Polyurethanschaum (siehe oben) keine oder zumindest kaum störende Geräuschemissionen auftreten. Es ist ferner erkannt worden, dass Geräuschemissionen zum Beispiel dann auftreten, wenn Dämpferfluid aus dem Stoßdämpfer austritt und sich auf der Dämpferkappe und/oder der Kolbenstange verteilt, obwohl das Dämpferfluid, häufig ein Mineralöl, an sich bereits zumeist haftreibungsmindernde Eigenschaften aufweist. Von daher ist überraschenderweise festgestellt worden, dass durch Hinzufügen eines weiteren, von dem Dämpferfluid verschiedenen Gleitmittels, welches sich vorzugsweise ebenfalls haftreibungsmindernd auswirkt, die Entstehung der unerwünschten Geräusche deutlich reduziert werden kann. Der vermeintliche Widerspruch, der daher kam, dass durch das Austreten des Dämpferfluids selbst erst die störenden Geräusche entstanden sind, konnte so aufgelöst werden.

Beispielsweise können Geräuschemissionen in der Stoßdämpferanordnung aber auch hervorgerufen werden durch andere Flüssigkeiten als Dämpferfluid, beispielsweise anderer Öle oder Wasser. Selbst partikuläre Materialien, beispielsweise Staub, können zu Geräuschemissionen führen.

Auch bei diesen - vom Dämpferfluid verschiedenen - Ursachen führt das Hinzufügen des Gleitmittels zu einer Reduzierung der Entstehung der unerwünschten Geräusche.

Das zusätzliche Anbringen des Gleitmittels, vorzugsweise in Form eines haftreibungsmindernden Materials, vermeidet aber zuverlässig das Entstehen von Geräuschen oder reduziert zumindest ihr Auftreten, so dass der störende Einfluss des Dämpferfluids erfolgreich kompensiert wird. Diese Geräusche entstehen beispielsweise aufgrund von Schwingungen infolge des Stick-Slip-Effektes.

Im Folgenden werden bevorzugte Ausführungsformen der Erfindung beschrieben, denen jeweils gemein ist, dass sie eine Minderung oder Eliminierung des Stick-Slip-Effektes bewirken.

In einer ersten bevorzugten Ausführungsform weist das Gleitmittel ein oder mehrere pulverförmige anorganische Materialien mit kristallinem Anteil auf oder besteht daraus.

Das pulverförmige Material nimmt vorzugsweise das Dämpferfluid von der Dämpferkappe und/oder der Kolbenstange auf und verhindert ferner aufgrund seiner Pulverstruktur das Entstehen des Stick-Slip-Effektes zumindest weitgehend. Überraschenderweise tritt bereits eine relativ starke Geräuschminderung auf, wenn das Gleitmittel nicht über die gesamte Oberfläche der Mantelfläche und/oder der Innenfläche aufgebracht wird, sondern lediglich bereichsweise.

In einer bevorzugten Ausführungsform weist das Gleitmittel ein Silikat, insbesondere ein Schichtsilikat auf oder besteht daraus, besonders bevorzugt ausgewählt aus der Liste bestehend aus:
- Talk,
- Muskovit,
- Phlogopit,
- Apophylit, oder
- Carletonit.

In einer alternativen bevorzugten Ausführungsform weist das Gleitmittel Graphit auf oder besteht daraus.

In einer weiteren bevorzugten Ausführungsform weist das Gleitmittel ein mittel- oder hochviskoses Fluid auf oder besteht daraus. Das Fluid weist vorzugsweise eine kinematische Viskosität von 270 mm²/s (cST) oder mehr bei 40 °C auf. Weiter vorzugsweise weist das Fluid eine kinematische Viskosität von 2000 mm²/s oder mehr bei 40 °C oder eine kinematische Viskosität von 270 mm²/s oder mehr bei 100 °C auf.

Weiter vorzugsweise weist das Fluid eine kinematische Viskosität von 16000 mm²/s oder mehr bei 40 °C und eine kinematische Viskosität von 2000 mm²/s oder mehr bei 100 °C auf.

Vorzugsweise ist das Fluid temperaturbeständig bei Temperaturen zwischen 10 °C und mindestens 80 °C.

Die in diesem Zusammenhang erwähnte Temperaturbeständigkeit bezieht sich auf eine Beständigkeit des Fluids im Sinne seines technischen sinnvollen Einsatzbereiches. Die Grenzen des Einsatzbereiches sind beispielsweise erreicht, wenn temperaturbedingt die chemische Zersetzung, Oxidation oder dergleichen eintreten.

Es kommen verschiedene Fluide in Betracht, die die gewünschte kinematische Viskosität aufweisen. Vorzugsweise werden Fluide mit einem niedrigen Reibkoeffizienten vorgesehen.

Der Reibkoeffizient ist niedrig bezogen auf den Reibkoeffizienten eines trockenen Formkörpers. Er wird beispielsweise gemessen mit der Mini-Traction-Machine von PCS Instruments, 78 Stanley Gardens, London, W3 7SZ, Großbritannien. Die Messung findet statt am System Stahl - Stahl. Ein niedriger Reibkoeffizient im Sinne dieser Erfindung liegt vorzugsweise in einem Bereich von 0,05 oder darunter, bevorzugt 0,02 oder darunter, besonders bevorzugt 0,01 oder darunter.

Besonders bevorzugt weist das Fluid ein Harz auf oder ist daraus ausgebildet, vorzugsweise Polyether, der mit mono- oder multifunktionellen Alkoholen als Starter unter Zusatz von Epoxiden hergestellt worden ist. Ein hoher Anteil an Ethylenoxid ist dabei von Vorteil. Vorzugsweise weist das Fluid einen Polyalkylenglykol auf oder besteht daraus.

In weiteren bevorzugten Ausführungsformen wird das Fluid unter Verwendung von einem oder mehrerer Zusätze anderer Alkylenepoxide hergestellt, wie beispielsweise Propylenoxid oder Butylenoxid. Diese führen dazu, dass die Zielverbindung im Anwendungsbereich flüssig ist.

Ethylenglykol oder kurzkettige flüssige Polyalkylenglykole, beispielsweise Diethylenglykol, Triethylenglykol oder auch Polyethylenglykol 300 oder Polyethylenglykol 400, eignen sich ebenfalls als Gleitmittel.

Besonders geeignet sind Copolymere auf Basis von Ethylenoxid und Propylenoxid.

Vorzugsweise weisen diese Polyalkylenglykole Oxidationsschutzmittel als Additiv auf. Sie können zudem entsalzt, neutralisiert, gepuffert und/oder auf einen bestimmten pH-Wert eingestellt sein.

Die Applikation der Polyalkylenglykole kann vorteilhaft nach vorangegangener Verdünnung, z.B. in wässriger Lösung erfolgen. Geeignet sind auch organische Lösungsmittel wie kurzkettige Alkohole, Ketone, Ester, Amide, oder Mischungen daraus, bevorzugt Mischungen organischer Lösemittel mit Wasser. Bevorzugt weist das Fluid eine oder mehrere weitere oberflächenaktive Substanzen auf.

Sofern im Zusammenhang mit der vorliegenden Erfindung von einem Fluid gesprochen wird, so sind herunter sowohl reinflüssige als auch pastöse Materialien zu verstehen, sofern sie fluidgleiche oder fluidähnliche Fließeigenschaften aufweisen.

Vorstehend ist die Erfindung jeweils entweder unter Bezugnahme auf die Verwendung eines partikelartigen, also pulverförmigen Materials als Gleitmittel, oder unter Bezugnahme auf ein Fluid als Gleitmittel beschrieben worden. In bevorzugten Ausführungsformen betrifft die Erfindung allerdings auch die Verwendung eines Gleitmittels, welches sowohl pulverförmige Bestandteile nach einer der vorstehend beschriebenen bevorzugten Ausführungsformen, als auch fluidische Bestandteile nach einer der vorstehend beschriebenen bevorzugten Ausführungsformen aufweist. Zur Vermeidung von Wiederholungen wird insoweit auf die obigen Ausführungen zu den Eigenschaften dieser Gleitmittelbestandteile verwiesen.

Das Gleitmittel weist in bevorzugten Ausführungsformen einen pH-Wert in einem Bereich von 5 bis 9 auf, besonders bevorzugt in einem Bereich von 6 bis 8. Abhängig vom verwendeten Gleitmittel ist dem Gleitmittel zum Erreichen des gewünschten pH-Werts vorzugsweise ein auf die Alkalität des Gleitmittels abgestimmter pH-Puffer beigemischt. Der pH-Puffer weist vorzugsweise einen Phosphatpuffer auf. Erfindungsgemäß ist unter einem Phosphatpuffer ein Stoffgemisch umfassend ein Hydrogenphosphat und ein Dihydrogenphosphat zu verstehen. Als Dihydrogenphosphat enthält der Phosphatpuffer besonders bevorzugt Natrium- und/oder Kaliumdihydrogenphosphat, und als Hydrogenphosphat besonders bevorzugt Dinatrium- und/oder Dikaliumhydrogenphosphat.

Die Erfindung ist in einem ersten Aspekt anhand der erfindungsgemäßen Stoßdämpferanordnung beschrieben worden. In einem weiteren Aspekt betrifft die Erfindung auch die Verwendung eines Gleitmittels zur Geräuschminderung einer Stoßdämpferanordnung. Die Erfindung löst die ihr zugrundeliegende Aufgabe bei einer Stoßdämpferanordnung, die einen Stoßdämpfer nach einer der vorstehend beschriebenen bevorzugten Ausführungsformen aufweist, der insbesondere eine Dämpferkappe, ein Dämpferfluid und eine Kolbenstange aufweist, und eine gegenüber dem Stoßdämpfer angeordnete Zusatzfeder, welche eine der Dämpferkappe zugewandte Mantelfläche und eine der Kolbenstange zugewandte Innenfläche aufweist, und dazu eingerichtet ist, die Bewegung des Stoßdämpfers in Richtung der Kolbenstange bei Kontakt mit der Dämpferkappe zu dämpfen, indem das Gleitmittel von dem Dämpferfluid verschieden ist, und die Mantelfläche und/oder die Innenfläche zumindest partiell mit dem Gleitmittel beschichtet wird.

Das Gleitmittel ist sowohl bei der erfindungsgemäßen Stoßdämpferanordnung als auch bei der erfindungsgemäßen Verwendung ein silikonfreies Gleitmittel.

Die erfindungsgemäße Verwendung macht sich die gleichen Vorteile und bevorzugten Ausführungsformen zunutze wie die erfindungsgemäße Stoßdämpferanordnung. Bevorzugte Ausführungsformen der Stoßdämpferanordnung sind somit zugleich auch die bevorzugten Ausführungsformen der erfindungsgemäßen Verwendung und umgekehrt.

Die Verwendung wird insbesondere vorteilhaft weitergebildet, indem das Gleitmittel
- ein haftreibungsminderndes Material ist, und/oder
ein oder mehrere pulverförmige, insbesondere organische oder anorganische, Materialien aufweist oder daraus besteht, und/oder
- ein Silikat, insbesondere ein Schichtsilikat aufweist oder daraus besteht, besonders bevorzugt ausgewählt aus der Liste bestehend aus:
   - Talk,
   - Muskovit,
   - Phlogopit,
   - Apophylit,
   - Carletonit, oder
   - Graphit.

Alternativ sieht die erfindungsgemäße Verwendung vor, dass das Gleitmittel
- ein mittel- oder hochviskoses Fluid aufweist oder daraus besteht, wobei vorzugsweise das Fluid
- eine kinematische Viskosität von 270 mm²/s (cST) oder mehr bei 40°C aufweist,
- besonders bevorzugt eine kinematische Viskosität von 2000 mm²/s oder mehr bei 40°C und eine kinematische Viskosität von 270 mm²/s oder mehr bei 100°C aufweist,
- ganz besonders bevorzugt eine kinematische Viskosität von 16000 mm²/s oder mehr bei 40°C und eine kinematische Viskosität von 2000 mm²/s oder mehr bei 100°C aufweist; und/oder
- eine Verbindung mit einem niedrigen Reibkoeffizienten aufweist oder daraus besteht, vorzugsweise einen Polyether, der mit mono- oder multifunktionellen Alkoholen als Starter unter Zusatz von Epoxiden hergestellt worden ist.

Ein hoher Anteil an Ethylenoxid ist dabei von Vorteil. Vorzugsweise weist das Fluid einen Polyalkylenglykol auf oder besteht daraus.

In weiteren bevorzugten Ausführungsformen weist das Fluid einen oder mehrere Zusätze anderer Alkylenepoxide auf, wie beispielsweise Propylenoxid oder Butylenoxid. Diese führen dazu, dass die Zielverbindung im Anwendungsbereich flüssig ist.

Ethylenglykole oder kurzkettige flüssige Polyalkylenglykole, beispielsweise Diethylenglykol, Triethylenglykol oder auch Polyethylenglykol 300 oder Polyethylenglykol 400, eignen sich ebenfalls als Gleitmittel.

Besonders geeignet sind Copolymere auf Basis von Ethylenoxid und Propylenoxid.

Vorzugsweise weisen diese Polyalkylenglykole Oxidationsschutzmittel als Additiv auf. Da sie zudem aufgrund des Herstellprozesses einen von 7 abweichenden pH-Wert haben können, können sie nachträglich auf bestimmte pH-Werte eingestellt sein, bevorzugt unter Einsatz von pH-Puffersystemen.

Die Applikation der Polyalkylenglykole kann vorteilhaft nach vorangegangener Verdünnung, z.B. in wässriger Lösung erfolgen. Geeignet sind auch organische Lösungsmittel wie kurzkettige Alkohole, Ketone, Ester, Amide, oder Mischungen daraus, bevorzugt Mischungen organischer Lösemittel mit Wasser. Bevorzugt weist das Fluid eine oder mehrere weitere oberflächenaktive Substanzen auf.

Der Reibkoeffizient ist niedrig bezogen auf den Reibkoeffizienten eines trockenen Formkörpers. Er wird beispielsweise gemessen mit der Mini-Traction-Machine von PCS Instruments, 78 Stanley Gardens, London, W3 7SZ, Großbritannien. Die Messung findet statt am System Stahl - Stahl. Ein niedriger Reibkoeffizient im Sinne dieser Erfindung liegt vorzugsweise in einem Bereich von 0,05 oder darunter, bevorzugt 0,02 oder darunter, besonders bevorzugt 0,01 oder darunter.

Im Rahmen der erfindungsgemäßen Verwendung kann das Gleitmittel auf die Zusatzfeder beispielsweise aufgesprüht und/oder aufgepinselt bzw. aufgestrichen werden, oder alternativ bzw. zusätzlich mittels Eintauchen aufgebracht werden. Das Gleitmittel kann auf die Weise im Bedarfsfall auch mehrmals aufgetragen werden, oder nach vorbestimmten Zeitspannen erneuert werden.

Die Erfindung wird nachfolgend unter Bezugnahme auf die beigefügten Figuren anhand eines bevorzugten Ausführungsbeispiels näher beschrieben. Hierbei zeigen:
- Fig. 1a, b: eine Stoßdämpferanordnung gemäß einem bevorzugten Ausführungsbeispiel in unterschiedlichen Betriebszuständen,
- Fig. 2: eine Detaildarstellung der Stoßdämpferanordnung gemäß Fig. 1a, b, und
- Fig. 3a - c: weitere Detaildarstellungen der Stoßdämpferanordnung gemäß den Fig. 1a, b und 2 in unterschiedlichen Betriebszuständen.

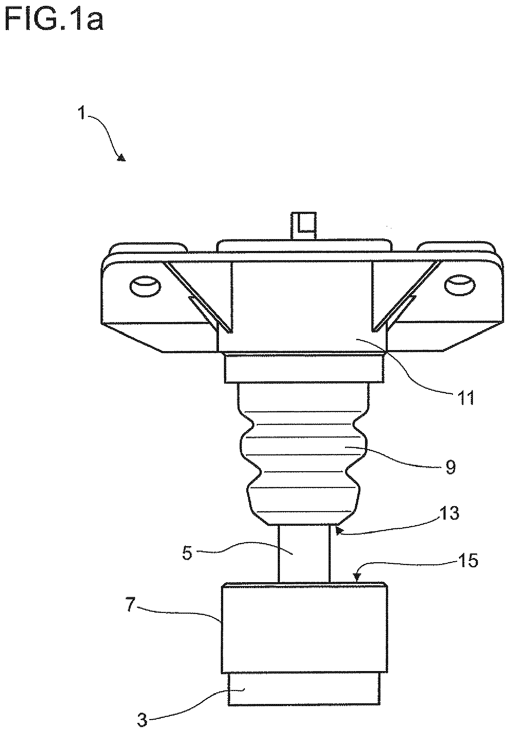

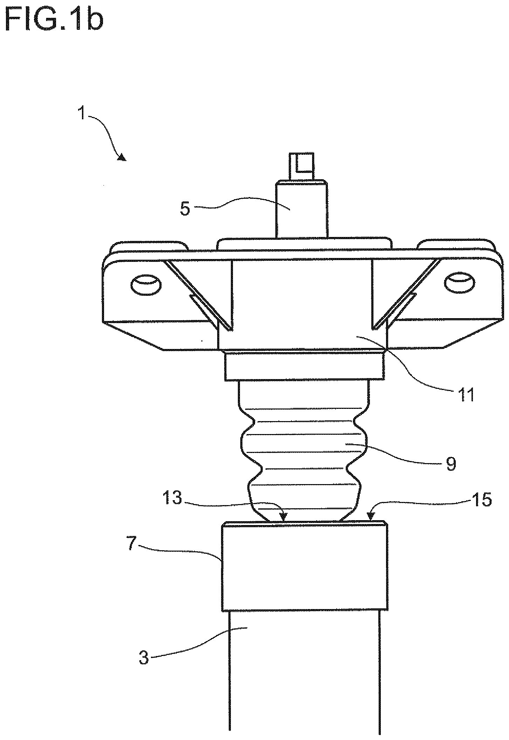

Fig. 1 zeigt eine Stoßdämpferanordnung 1. Die Stoßdämpferanordnung 1 weist einen Stoßdämpfer 3 mit einer Dämpferkappe 7 und einer Kolbenstange 5, die sich durch die Dämpferkappe 7 hindurch erstreckt, auf.

Gegenüber der Dämpferkappe 7 ist an der Kolbenstange 5 eine Zusatzfeder 9 entlang der Kolbenstange angeordnet. Die Zusatzfeder 9 wird von einer Basis 11 aufgenommen.

Die Zusatzfeder 9 weist eine äußere Mantelfläche 13 auf, die einer Mantelfläche 15 der Dämpferkappe 7 zugewandt ist.

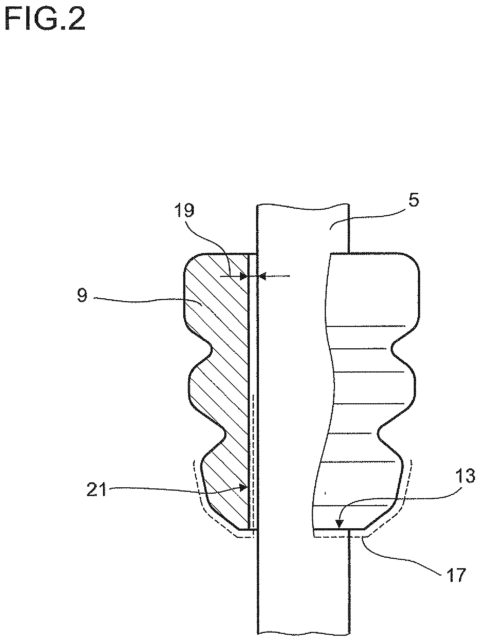

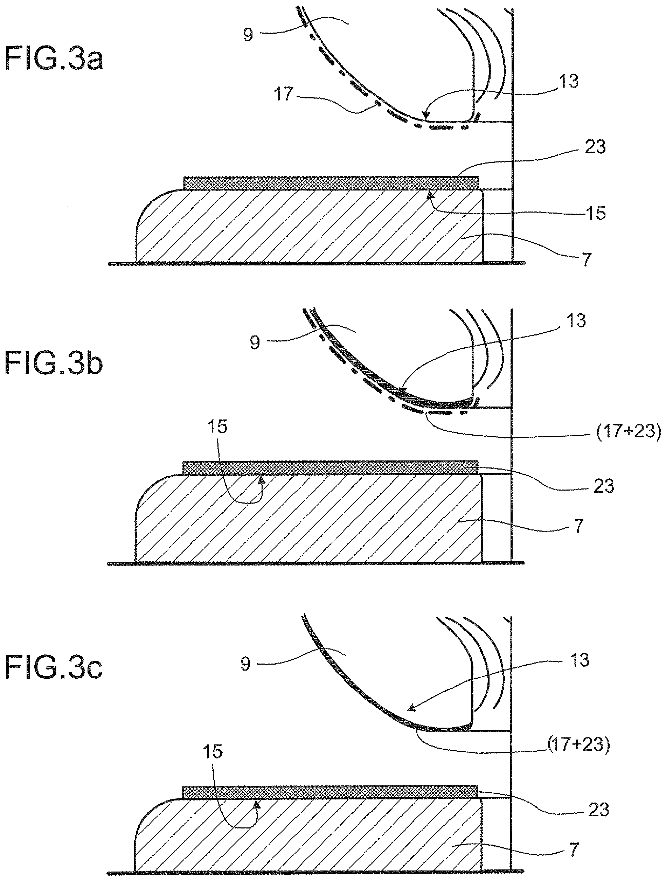

Im Betrieb der Stoßdämpferanordnung 1 kommt es infolge der Dämpferbewegung dazu, dass sich ein Zustand wie gemäß Fig. 1B einstellt. in Diesem Zustand ist die Mantelfläche 13 der Zusatzfeder 9 in Kontakt mit der Stirnfläche 15 der Dämpferkappe. Bei fortgesetzter Bewegung des Stoßdämpfers 3 führt die Zusatzfeder 9 eine Ausweichbewegung aus, infolge derer es zu einer Relativbewegung der Mantelfläche 13 entlang der Stirnfläche 15 kommt. Das erfindungsgemäße Wirkprinzip, was dann zum Tragen kommt, ist in den Fig. 2 und 3a - c näher erläutert.

In Fig. 2 ist zunächst die Zusatzfeder 9 in teilweise aufgebrochenem Zustand abgebildet. Die Zusatzfeder 9 ist in dem in Fig. 2 gezeigten Zustand nicht komprimiert.

An der Mantelfläche 13 ist die Zusatzfeder 9 zumindest partiell mit einem Gleitmittel 17 beschichtet, welches besonders bevorzugt ein haftreibungsminderndes Material wie beispielsweise Talkumpulver oder ein anderes Material der vorstehend beschriebenen bevorzugten Ausführungsformen ist. Das Gleitmittel 17 ist im gezeigten Ausführungsbeispiel exemplarisch zusätzlich zumindest partiell entlang einer Innenfläche 21 der Zusatzfeder 9 aufgebracht, wobei die Innenfläche 21 der Kolbenstange 5 zugewandt ist. Zwischen der Innenfläche 21 und der Kolbenstange 5 ist ein Spalt 19 ausgebildet.

Kommt es zu einer Kompression der Zusatzfeder wie beispielsweise in Fig. 1b angedeutet, dehnt sich dich Zusatzfeder 9 in radialer Richtung, also quer zur Kolbenstange 5, nach außen und nach innen aus. Die Innenfläche 21 kommt dann in Anlage mit der Kolbenstange 5. Auch hierbei spielt das Gleitmittel 17 die erfindungsgemäßen Vorteile aus. Der geräuschmindernde Effekt ist zwar nicht so stark ausgeprägt wie bei der Aufbringung des Gleitmittels 17 auf der äußeren Mantelfläche 13, aber dennoch vorhanden und erfindungsgemäß vorteilhaft.

Das Ausführungsbeispiel gemäß Fig. 2 ist insofern exemplarisch zu verstehen, dass sowohl das ausschließliche Beschichten der Innenfläche 21 (zumindest partiell) als auch das ausschließliche Beschichten nur der äußeren Mantelfläche 13 (zumindest partiell) als separat umfasste bevorzugte Ausführungsformen zu verstehen sind.

Die Fig. 3a - c zeigen in unterschiedlichen Betriebszuständen das Verhalten des Gleitmittels 17. Zugunsten einer einfachen Darstellung ist hier ausschließlich die Beschichtung der äußeren Mantelfläche 13 gezeigt. Das Konzept ließe sich aber analog auf das Verhalten einer beschichteten Innenfläche 21 relativ zur Kolbenstange 5 übertragen (vgl. Fig. 2).

In Fig. 3a ist zunächst ein Zustand gezeigt, in dem die Zusatzfeder 9 mit Gleitmittel 17 an der äußeren Mantelfläche 13 beschichtet ist, aber noch nicht in Kontakt mit der Dämpferkappe 7 getreten ist. Auf der Stirnfläche 15 der Dämpferkappe 7 hat sich infolge des Betriebs des Stoßdämpfers Dämpferfluid 23 angesammelt. Wird ausgehend von Fig. 3a die Zusatzfeder 9 mit der Dämpferkappe 7 in Kontakt gebracht, nimmt die äußere Mantelfläche 13 etwas von dem Dämpferfluid 23 auf. Es befinden sich dann auf der Mantelfläche 13 sowohl Dämpferfluid 23 als auch Gleitmittel 17, welches das Dämpferfluid 23 vorzugsweise, aber nicht notwendigerweise, teilweise oder vollständig abbindet, sofern das Gleitmittel ein pulverförmiges Material aufweist oder daraus besteht.

Durch das zusätzliche Vorhandensein des Gleitmittels 17 wird bei fortgesetztem Betrieb das Auftreten eines ungewünschten Stick-Slip-Effektes zuverlässig gemindert.

In Fig. 3c ist der Zustand nach längerer Betriebsdauer oder der Zustand bei nur sehr sparsamer Benetzung der Mantelfläche 13 mit Gleitmittel 17 gezeigt. Die Menge an Dämpferfluid 23 und an Gleitmittel 17 auf der Mantelfläche 13 ist insgesamt sehr viel geringer als im Zustand gemäß Fig. 3b. Dennoch wird auch bei einer derartigen Anordnung noch eine signifikante Geräuschminderung relativ zu einem Zustand erzielt, bei dem zwar Dämpferfluid 23, aber kein zusätzliches Gleitmittel 17 von verschiedener Ausprägung relativ zum Dämpferfluid 23 auf der Mantelfläche 13 vorhanden wäre.

Es ist ein besonderer Vorteil der Erfindung, dass diese mit geringem Aufwand auch nachträglich bei bereits bestehenden Dämpfersystemen umgesetzt werden kann. Da bereits eine partielle und/oder sehr dünne Beschichtung der Zusatzfeder 9 mit dem Gleitmittel 17 für eine zuverlässige Geräuschminderung ausreicht, können die etwaig vorzusehenden Wartungsintervalle zum Erneuern der Beschichtung entsprechend lang gewählt werden.

In einer bevorzugten Ausführungsform, die ein pulverförmiges Material als Gleitmittel vorsieht, liegt die Menge des aufgebrachten Gleitmittels in einem Bereich von 1 kg/m² oder weniger, bevorzugt in einem Bereich von 250 g/m² oder weniger, besonders bevorzugt in einem Bereich zwischen 1 g/m² und 150 g/m².

In einer weiteren bevorzugten Ausführungsform, bei der ein Polyalkylenglykol als Gleitmittel verwendet wird, liegt die Menge aufgebrachten Gleitmittels vorzugsweise in einem Bereich von weniger als 500 g/m², bevorzugt in einem Bereich von 100 g/m² oder darunter, besonders bevorzugt in einem Bereich zwischen 0,1 g/m² und 40 g/m².

Es hat sich für viele Praxisfälle als ausreichend erwiesen, wenn beispielsweise bei der Verwendung von Talkumpulver als Gleitmittel 17 eine Menge von nur ca. 100 g/m² Talkumpulver bezogen auf die Oberfläche eines Polyurethanformkörpers verwendet wird. Bei der Verwendung von Polyalkylenglykolen hat sich sogar gezeigt, dass die gewünschten Effekte bereits bei Mengen von ca. 15 g/m² eintreten.

## Patentansprüche

1. Stoßdämpferanordnung (1) für eine Fahrzeugfederung, mit
einem Stoßdämpfer (3), der eine Dämpferkappe (7) mit einer Stirnfläche (15), und
eine Kolbenstange (5) aufweist, und
einer an der Kolbenstange (5) gegenüber dem Stoßdämpfer (3) angeordneten Zusatzfeder, welche eine der Dämpferkappe (7) zugewandte Mantelfläche (13) und
eine der Kolbenstange (5) zugewandte Innenfläche (21) aufweist, und dazu eingerichtet ist, die Bewegung des Stoßdämpfers (3) in Richtung der Kolbenstange (5) bei Kontakt mit der Dämpferkappe (7) zu dämpfen,
wobei die Mantelfläche (13) der Zusatzfeder (9) in Kontakt mit der Stirnfläche (15) der Dämpferkappe gelangt und die Zusatzfeder (9) bei fortgesetzter Bewegung des Stoßdämpfers (3) eine Ausweichbewegung ausführt, infolge derer es zu einer Relativbewegung der Mantelfläche (13) entlang der Stirnfläche (15) kommt, und
**dadurch gekennzeichnet, dass**
sich die Zusatzfeder (9) bei Kompression der Zusatzfeder quer zur Kolbenstange (5) nach innen und außen ausdehnt, woraufhin die Innenfläche (21) in Anlage mit der Kolbenstange (5) kommt,
und, dass die der Dämpferkappe (7) zugewandte Mantelfläche (13) und/oder die der Kolbenstange (5) zugewandte Innenfläche (21) zumindest partiell mit einem Gleitmittel (17) beschichtet ist.

2. Stoßdämpferanordnung nach Anspruch 1, **dadurch gekennzeichnet, dass** der Stoßdämpfer ein Dämpferfluid (23) aufweist, wobei das Gleitmittel von dem Dämpferfluid (23) verschieden ist.

3. Stoßdämpferanordnung nach Anspruch 1 oder 2,
**dadurch gekennzeichnet, dass** das Gleitmittel (17) ein haftreibungsminderndes Material ist.

4. Stoßdämpferanordnung nach einem der vorstehenden Ansprüche,
**dadurch gekennzeichnet, dass** das Gleitmittel (17) ein oder mehrere pulverförmige organische und/oder anorganische Materialien aufweist oder daraus besteht.

5. Stoßdämpferanordnung nach Anspruch 4,
**dadurch gekennzeichnet, dass** das Gleitmittel (17) ein Silikat, insbesondere ein Schichtsilikat aufweist oder daraus besteht, besonders bevorzugt ausgewählt aus der Liste bestehend aus:
- Talk,
- Muskovit,
- Phlogopit,
- Apophylit, oder
- Carletonit.

6. Stoßdämpferanordnung nach Anspruch 4 oder 5,
**dadurch gekennzeichnet, dass** das Gleitmittel (17) Graphit aufweist oder daraus besteht.

7. Stoßdämpferanordnung nach einem der Ansprüche 1 bis 3,
**dadurch gekennzeichnet, dass** das Gleitmittel (17) ein mittel- oder hochviskoses Fluid aufweist oder daraus besteht.

8. Stoßdämpferanordnung nach Anspruch 7,
wobei das Fluid eine kinematische Viskosität von 270 mm²/s oder mehr bei 40°C aufweist, vorzugsweise eine kinematische Viskosität von 2000 mm²/s oder mehr bei 40°C und eine kinematische Viskosität von 270 mm²/s oder mehr bei 100°C; besonders bevorzugt eine kinematische Viskosität von 16000 mm²/s oder mehr bei 40°C und eine kinematische Viskosität von 2000 mm²/s oder mehr bei 100°C.

9. Stoßdämpferanordnung nach einem der Ansprüche 7 oder 8,
**dadurch gekennzeichnet, dass** das Fluid ein Harz aufweist oder daraus besteht, vorzugsweise ein Polyalkylenglykol.

10. Stoßdämpferanordnung nach einem der Ansprüche 1 bis 3,
**dadurch gekennzeichnet, dass** das Gleitmittel (17) ein wasser- und/oder ölabweisendes Material, insbesondere Fluid, aufweist oder daraus besteht.

11. Stoßdämpferanordnung nach einem der vorstehenden Ansprüche,
wobei das Gleitmittel (17) pulverförmige und fluidische Bestandteile aufweist.

12. Verwendung eines Gleitmittels zur Geräuschminderung einer Stoßdämpferanordnung, die nach einem der vorstehenden Ansprüche ausgebildet ist.

13. Verwendung nach Anspruch 12,
wobei das Gleitmittel (17)
- ein haftreibungsminderndes Material ist, und/oder
- ein oder mehrere pulverförmige, insbesondere organische und/oder anorganische Materialien, aufweist oder daraus besteht, und/oder
- ein Silikat, insbesondere ein Schichtsilikat aufweist oder daraus besteht, besonders bevorzugt ausgewählt aus der Liste bestehend aus:
- Talk,
- Muskovit,
- Phlogopit,
- Apophylit, oder
- Carletonit; und/oder
- Graphit aufweist oder daraus besteht.

14. Verwendung nach Anspruch 13,
wobei das Gleitmittel (17)
- ein mittel- oder hochviskoses Fluid aufweist oder daraus besteht, wobei vorzugsweise das Fluid
- eine kinematische Viskosität von 270 mm²/s oder mehr bei 40°C aufweist, vorzugsweise
- eine kinematische Viskosität von 2000 mm²/s oder mehr bei 40°C und eine kinematische Viskosität von 270 mm²/s oder mehr bei 100°C aufweist, besonders bevorzugt
- eine kinematische Viskosität von 16000 mm²/s oder mehr bei 40°C und eine kinematische Viskosität von 2000 mm²/s oder mehr bei 100°C aufweist; und/oder
- ein Harz aufweist oder daraus besteht.

15. Verwendung nach einem der Ansprüche 12 bis 14,
wobei das Gleitmittel (17) eine Kombination aus festen und fluidischen Bestandteilen ist.

## Claims

1. A shock absorber arrangement (1) for a vehicle suspension, comprising
a shock absorber (3) which has a damper cap (7) having an end face (15) and has a piston rod (5) and
a supplementary spring which is arranged on the piston rod (5) opposite the shock absorber (3) and has an outer surface (13) facing the damper cap (7) and an inner surface (21) facing the piston rod (5) and is configured for damping the movement of the shock absorber (3) in the direction of the piston rod (5) on contact with the damper cap (7),
where the outer surface (13) of the supplementary spring (9) comes into contact with the end face (15) of the damper cap and the supplementary spring (9) performs an evasive movement if the shock absorber (3) continues to move, resulting in a relative movement of the outer surface (13) along the end face (15), and
wherein
the supplementary spring (9) expands in an inward and outward direction transverse to the piston rod (5) on compression of the supplementary spring, whereupon the inner surface (21) comes into contact with the piston rod (5),
and wherein the outer surface (13) facing the damper cap (7) and/or the inner surface (21) facing the piston rod (5) is at least partially coated with a lubricant (17).

2. The shock absorber arrangement according to claim 1, wherein the shock absorber comprises a damper fluid (23) and the lubricant is different from the damper fluid (23).

3. The shock absorber arrangement according to claim 1 or 2,
wherein the lubricant (17) is a friction-reducing material.

4. The shock absorber arrangement according to any of the preceding claims,
wherein the lubricant (17) comprises or consists of one or more pulverulent organic and/or inorganic materials.

5. The shock absorber arrangement according to claim 4,
wherein the lubricant (17) comprises or consists of a silicate, in particular a sheet silicate, particularly preferably selected from the group consisting of:
- talc,
- muscovite,
- phlogopite,
- apophyllite, or
- carletonite.

6. The shock absorber arrangement according to claim 4 or 5,
wherein the lubricant (17) comprises or consists of graphite.

7. The shock absorber arrangement according to any of claims 1 to 3,
wherein the lubricant (17) comprises or consists of a medium- or high-viscosity fluid.

8. The shock absorber arrangement according to claim 7,
wherein the fluid has a kinematic viscosity of 270 mm²/s or more at 40°C, preferably a kinematic viscosity of 2000 mm²/s or more at 40°C and a kinematic viscosity of 270 mm²/s or more at 100°C; particularly preferably a kinematic viscosity of 16 000 mm²/s or more at 40°C and a kinematic viscosity of 2000 mm²/s or more at 100°C.

9. The shock absorber arrangement according to either claim 7 or 8,
wherein the fluid comprises or consists of a resin, preferably a polyalkylene glycol.

10. The shock absorber arrangement according to any of claims 1 to 3,
wherein the lubricant (17) comprises or consists of a water- and/or oil-repellent material, in particular fluid.

11. The shock absorber arrangement according to any of the preceding claims,
wherein the lubricant (17) comprises pulverulent and fluidic constituents.

12. The use of a lubricant for reducing noise of a shock absorber arrangement configured according to any of the preceding claims.

13. The use according to claim 12,
wherein the lubricant (17)
- is a friction-reducing material and/or
- comprises or consists of one or more pulverulent, in particular organic and/or inorganic, materials and/or
- comprises or consists of a silicate, in particular a sheet silicate, particularly preferably selected from the group consisting of:
- talc,
- muscovite,
- phlogopite,
- apophyllite, or
- carletonite; and/or
- comprises or consists of graphite.

14. The use according to claim 13,
wherein the lubricant (17)
- comprises or consists of a medium- or high-viscosity fluid and the fluid
- preferably has a kinematic viscosity of 270 mm²/s or more at 40°C, preferably
- has a kinematic viscosity of 2000 mm²/s or more at 40°C and a kinematic viscosity of 270 mm²/s or more at 100°C, particularly preferably
- has a kinematic viscosity of 16 000 mm²/s or more at 40°C and a kinematic viscosity of 2000 mm²/s or more at 100°C; and/or
- comprises or consists of a resin.

15. The use according to any of claims 12 to 14, wherein the lubricant (17) is a combination of solid and fluidic constituents.

## Revendications

1. Agencement d'amortisseur de chocs (1) pour une suspension de véhicule, avec
un amortisseur de chocs (3), qui présente un capuchon d'amortisseur (7) avec une surface frontale (15), et une tige de piston (5), et
un ressort supplémentaire agencé sur la tige de piston (5) en face d'amortisseur de chocs (3), qui présente une surface d'enveloppe (13) tournée vers le capuchon d'amortisseur (7) et une surface intérieure (21) tournée vers la tige de piston (5), et qui est adapté pour amortir le mouvement de l'amortisseur de chocs (3) en direction de la tige de piston (5) lors du contact avec le capuchon d'amortisseur (7),
dans lequel la surface d'enveloppe (13) du ressort supplémentaire (9) arrive en contact avec la surface frontale (15) du capuchon d'amortisseur et le ressort supplémentaire (9) effectue, lorsque l'amortisseur de chocs (3) continue de se déplacer, un mouvement d'évitement à la suite duquel il se produit un mouvement relatif de la surface d'enveloppe (13) le long de la surface frontale (15), et
**caractérisé en ce que**
le ressort supplémentaire (9) s'étend vers l'intérieur et vers l'extérieur lors de la compression du ressort supplémentaire transversalement à la tige de piston (5), après quoi la surface intérieure (21) vient en appui contre la tige de piston (5),
et **en ce que** la surface d'enveloppe (13) tournée vers le capuchon d'amortisseur (7) et/ou la surface intérieure (21) tournée vers la tige de piston (5) est revêtue au moins partiellement d'un lubrifiant (17).

2. Agencement d'amortisseur de chocs selon la revendication 1, **caractérisé en ce que** l'amortisseur de chocs présente un fluide d'amortisseur (23), le lubrifiant étant différent du fluide d'amortisseur (23).

3. Agencement d'amortisseur de chocs selon la revendication 1 ou 2, **caractérisé en ce que** le lubrifiant (17) est un matériau réduisant le frottement par adhérence.

4. Agencement de amortisseur de chocs selon l'une quelconque des revendications précédentes, **caractérisé en ce que** le lubrifiant (17) présente un ou plusieurs matériaux organiques et/ou inorganiques pulvérulents ou en est constitué.

5. Agencement d'amortisseur de chocs selon la revendication 4, **caractérisé en ce que** le lubrifiant (17) présente un silicate, notamment un silicate lamellaire, ou en est constitué, de manière particulièrement préférée choisi dans la liste constituée par :
- le talc,
- la muscovite,
- la phlogopite,
- l'apophylite ou
- la carlétonite.

6. Agencement d'amortisseur de chocs selon la revendication 4 ou 5, **caractérisé en ce que** le lubrifiant (17) présente du graphite ou en est constitué.

7. Agencement d'amortisseur de chocs selon l'une quelconque des revendications 1 à 3, **caractérisé en ce que** le lubrifiant (17) présente un fluide à viscosité moyenne ou élevée ou en est constitué.

8. Agencement d'amortisseur de chocs selon la revendication 7, dans lequel le fluide présente une viscosité cinématique de 270 mm²/s ou plus à 40 °C, de préférence une viscosité cinématique de 2 000 mm²/s ou plus à 40 °C et une viscosité cinématique de 270 mm²/s ou plus à 100 °C ; de manière particulièrement préférée une viscosité cinématique de 16 000 mm²/s ou plus à 40 °C et une viscosité cinématique de 2 000 mm²/s ou plus à 100 °C.

9. Agencement d'amortisseur de chocs selon l'une quelconque des revendications 7 ou 8, **caractérisé en ce que** le fluide présente une résine ou en est constitué, de préférence un polyalkylène glycol.

10. Agencement d'amortisseur de chocs selon l'une quelconque des revendications 1 à 3, **caractérisé en ce que** le lubrifiant (17) présente un matériau hydro- et/ou oléofuge, notamment un fluide, ou en est constitué.

11. Agencement d'amortisseur de chocs selon l'une quelconque des revendications précédentes, dans lequel le lubrifiant (17) présente des constituants pulvérulents et fluides.

12. Utilisation d'un lubrifiant pour réduire le bruit d'un agencement d'amortisseur de chocs, qui est réalisé selon l'une quelconque des revendications précédentes.

13. Utilisation selon la revendication 12, dans laquelle le lubrifiant (17)
- est un matériau réduisant le frottement par adhérence, et/ou
- présente un ou plusieurs matériaux pulvérulents, notamment organiques et/ou inorganiques, ou en est constitué, et/ou
- présente un silicate, notamment un silicate lamellaire, ou en est constitué, de manière particulièrement préférée choisi dans la liste constituée par :
- le talc,
- la muscovite,
- la phlogopite,
- l'apophylite ou
- la carlétonite ; et/ou
- présente du graphite ou en est constitué.

14. Utilisation selon la revendication 13, dans laquelle le lubrifiant (17)
- présente un fluide à viscosité moyenne ou élevée ou en est constitué, de préférence le fluide
- présentant une viscosité cinématique de 270 mm²/s ou plus à 40 °C, de préférence
- présentant une viscosité cinématique de 2 000 mm²/s ou plus à 40 °C et une viscosité cinématique de 270 mm²/s ou plus à 100 °C, de manière particulièrement préférée
- présentant une viscosité cinématique de 16 000 mm²/s ou plus à 40 °C et une viscosité cinématique de 2 000 mm²/s ou plus à 100 °C ; et/ou
- présente une résine ou en est constitué.

15. Utilisation selon l'une quelconque des revendications 12 à 14, dans laquelle le lubrifiant (17) est une combinaison de constituants solides et fluides.
